# EUROPEAN PATENT APPLICATION

(11) **EP 3 955 449 A1**
(43) Date of publication of application: **16.02.2022**
(21) Application number: 21189719.4
(22) Date of filing: 04.08.2021
(51) Int. Cl.: H02M 3/156, H02M 3/157, H02M 1/00, H02M 3/158

(54) **CONTROL DEVICE AND CONVERTER**

(30) Priority: 11.08.2020 JP 2020135539
(71) Applicant: Rohm Co., Ltd., Kyoto-shi, Kyoto 615-8585 (JP)
(72) Inventor: SEKIGUCHI, Hiroshi, Kyoto, 615-8585 (JP)
(74) Representative: Witte, Weller & Partner Patentanwälte mbB

(57) **Abstract**

A control device (10) that controls an output voltage of a converter includes: a neural network (11) configured to generate a control signal for controlling a power supply block (30) based on a detection signal from an output stage of the power supply block (30) that supplies power to a load of the converter; a model generator (12) configured to generate a model of a nonlinear dynamic system by machine-learning from the detection signal; a model storage (13) configured to store the model generated by the model generator (12); and a model switch (14) configured to switch to a model, which is selected from models stored in the model storage (13) and is optimal for a latest detection signal, and provide the switched model to the neural network (11), wherein the neural network (11) generates the control signal based on a future output voltage predicted by using the model provided by the model switch (14).

## Description

### CROSS-REFERENCE TO RELATED APPLICATION

This application is based upon and claims the benefit of priority from Japanese Patent Application No. 2020-135539, filed on August 11, 2020.

### TECHNICAL FIELD

The present disclosure relates to a control device for controlling a converter, and a converter.

### BACKGROUND

DC/DC converters and AC/DC converters that respectively convert input DC and AC power into DC power of a predetermined voltage by using pulse width modulation (PWM), and supply the converted DC power are known in the related art. In such converters, in order to reduce a fluctuation in output voltage that may occur due to a fluctuation in load and to supply DC power in a stable manner, a PID control, in which a feedback-control using a deviation from a target value and integral and derivative of the deviation is performed, has sometimes been used. In the related art, a DC/DC converter that switches between a PID control and a fuzzy control by an artificial intelligence neural network is known.

On the other hand, a RegimeCast method is also known in the related art. In the RegimeCast method, long-term event prediction is realized by discovering features from among large-scale data streams such as sensor data and automatically recognizing potential time-series patterns, that is, regimes, by extending the concept of "regime shift" in a natural ecosystem model to express time-series event data as an adaptive nonlinear dynamic system.

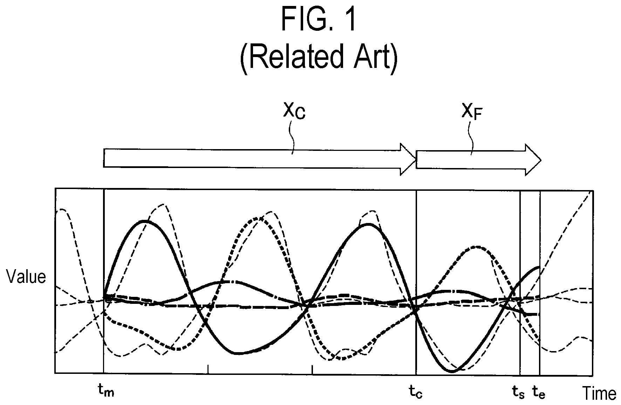

FIG. 1 is a time chart for explaining RegimeCast. In a latest time frame Xc from a past time tₘ to a current time tc, actual data of possible regimes are indicated by different thin lines. Future data can be predicted by selecting an optimal model for the actual data from a plurality of models indicated by different thick lines and applying the selected model to a time frame X_{F} from the current time t_{c} to a future time ts. For example, events from the time t_{c} to the time ts in the future time frame X_{F} can be predicted based on an event stream of the latest time frame X_{C}.

By the way, although the PID control performs control so as to follow the target value by adjusting the deviation from the target value and the integration and differentiation of the deviation, it is difficult to respond to all controls. Thus, when controlling against an unexpected fluctuation, it takes time for the output voltage to converge to the target value because overshoot, ringing, noise, loss, or the like occurs in the output voltage.

### SUMMARY

Some embodiments of the present disclosure provide a control device and a converter capable of quickly converging an output voltage to a target value even in the case of an unexpected fluctuation in the converter, and furthermore, reducing overshoot, ringing, noise, loss, or the like that may occur due to the fluctuation.

A control device according to the present disclosure controls an output voltage of a converter. The control device includes: a neural network configured to generate a control signal for controlling a power supply block based on a detection signal from an output stage of the power supply block that supplies power to a load of the converter; a model generator configured to generate a model of a nonlinear dynamic system by machine-learning from the detection signal; a model storage configured to store the model generated by the model generator; and a model switch configured to switch to a model, which is selected from models stored in the model storage and is optimal for a latest detection signal, and provide the switched model to the neural network, wherein the neural network generates the control signal based on a future output voltage predicted by using the model provided by the model switch.

The control device may further include a waveform generator configured to generate a waveform for driving the power supply block based on the control signal supplied from the neural network. The converter may be a DC/DC converter or an AC/DC converter.

A converter according to the present disclosure includes a power supply block configured to supply power to a load, and a control block configured to control the power supply block. The control block includes: a neural network that generates a control signal for controlling the power supply block based on a detection signal from an output stage of the power supply block; a model generator that generates a model of a nonlinear dynamic system by machine-learning from the detection signal; a model storage that stores the model generated by the model generator; and a model switch that switches to a model which is selected from models stored in the model storage and is optimal for a latest detection signal, and provides the switched model to the neural network, wherein the neural network generates the control signal based on a future output voltage predicted by using the model provided by the model switch.

The control block may convert the control signal, which is digital data, supplied from the neural network into an analog signal, and supply the analog signal to the power supply block.

The power supply block may include a transistor and a diode, which are connected in series between a power supply line and a ground line, and the transistor may be driven based on the control signal from the control block to output a current from a connection node between the transistor and the diode. The neural network may control the transistor to operate in an active region.

The power supply block may include a first transistor and a second transistor, which are connected in series between a power supply line and a ground line, and the first transistor and the second transistor may be driven based on the control signal from the control block to output a current from a connection node between the first transistor and the second transistor. The neural network may control at least one of the first transistor and the second transistor to operate in an active region.

The control block and the power supply block may be galvanically insulated from each other. The converter may constitute a DC/DC converter or an AC/DC converter.

### BRIEF DESCRIPTION OF DRAWINGS

The accompanying drawings, which are incorporated in and constitute a part of the specification, illustrate embodiments of the present disclosure.
FIG. 1 is a time chart for explaining RegimeCast.
FIG. 2 is a diagram showing a schematic configuration of a control device according to a first embodiment.
FIG. 3 is a diagram showing a schematic configuration of a control device according to a second embodiment.
FIG. 4 is a diagram showing a schematic configuration of a DC/DC converter according to a third embodiment.
FIG. 5 is a diagram showing a schematic configuration of a control block of the DC/DC converter according to the third embodiment.
FIGS. 6A to 6C are time charts showing waveforms in the DC/DC converter according to the third embodiment.
FIG. 7 is a diagram showing a schematic configuration of a DC/DC converter according to a fourth embodiment.
FIG. 8 is a diagram showing a schematic configuration of a DC/DC converter according to a fifth embodiment.
FIG. 9 is a diagram showing a schematic configuration of a DC/DC converter of a comparative example.
FIGS. 10A to 10D are time charts showing waveforms in the DC/DC converter of the comparative example.

### DETAILED DESCRIPTION

Reference will now be made in detail to various embodiments, examples of which are illustrated in the accompanying drawings. In the following detailed description, numerous specific details are set forth in order to provide a thorough understanding of the present disclosure. However, it will be apparent to one of ordinary skill in the art that the present disclosure may be practiced without these specific details. In other instances, well-known methods, procedures, systems, and components have not been described in detail so as not to unnecessarily obscure aspects of the various embodiments.

Embodiments of a control device and a DC/DC converter will now be described in detail with reference to the drawings.

It is assumed that a control device according to embodiments realizes RegimeCast known in the related art by artificial intelligence by a neural network and controls a power supply block of a converter to supply an output voltage of a target value. The control device may be included as a control block in the converter, or may form the converter together with the power supply block. In the present disclosure, a DC/DC converter and an AC/DC converter are collectively referred to as a converter.

### (First Embodiment)

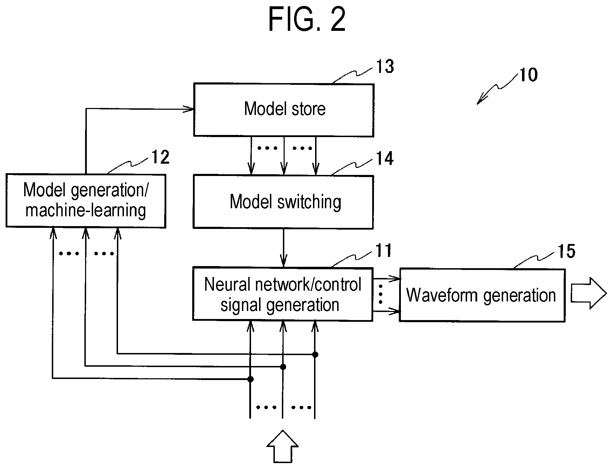

FIG. 2 is a diagram showing a schematic configuration of a control device according to a first embodiment. A control device 10 includes a neural network 11 that generates a control signal for controlling a power supply block in a converter. The neural network 11 generates the control signal for controlling the power supply block (not shown) by using a model of a nonlinear dynamic system, based on a detection signal provided from the power supply block.

The detection signal is input to the neural network 11, as time-series data converted into digital data by an A/D converter (not shown). The detection signal may be at least one or more of an output voltage value, an output current value, an input voltage value, an inductor current value, a capacitor current value, and the like of the power supply block. The control signal generated by using the model is output as digital data from the neural network 11. The neural network 11 may be an appropriate type of neural network such as a spiking neural network, a recurrent neural network, a convolutional neural network, a fuzzy neural network, and the like.

The control device 10 includes a model generator 12 that generates a model by machine-learning from the detection signal supplied from the power supply block. The model generator 12 learns the detection signal as learning data to generate a model of a nonlinear dynamic system. For example, the model generator 12 may determine parameters of the model of the nonlinear dynamic system.

The same detection signal input to the neural network 11 is input to the model generator 12. The detection signal is time-series data converted into a digital signal by an A/D converter (not shown).

The control device 10 includes a model storage 13 that stores the model generated by the model generator 12. Data of the model generated by the model generator 12 are supplied to the model storage 13. The data of the model may be, for example, parameters of the model of the nonlinear dynamic system. The model storage 13 may be configured by a nonvolatile memory.

The control device 10 includes a model switch 14 that switches the model stored in the model storage 13 and provides it to the neural network 11. The same detection signal input to the neural network 11 is input to the model switch 14 through a signal line (not shown). The detection signal is time-series data converted into a digital signal by an A/D converter (not shown).

Based on the time-series data of the input detection signal, the model switch 14 adaptively switches to an optimal model for the time-series data in real time from among a plurality of models stored in the model storage 13, and provides the optimal model to the neural network 11. The model may be given by parameters of the model of the nonlinear dynamic system.

The neural network 11 uses the model provided from the model switch 14 to generate the control signal for controlling the power supply block based on the time-series data of the detection signal. The neural network 11 can predict future time-series data by expressing the time-series data as an adaptive nonlinear dynamic system by the concept of regime shift, and can generate the control signal that controls the power supply block so as to perform quick convergence to a target value. As the model selected from the model switch 14, parameters of the nonlinear dynamic system of the model may be provided to the neural network 11. The neural network outputs the control signal as digital data.

The control device 10 includes a waveform generator 15 that converts the control signal, which is digital data supplied from the neural network 11, into an analog signal waveform and provides the analog signal waveform to the power supply block. The waveform generator 15 may be configured by a D/A converter. The waveform generator 15 generates a waveform necessary for controlling on/off of a single transistor serving as a corresponding switching element in the power supply block. Here, the power supply block may include a single transistor as a switching element even when the power supply block constitutes a DC/DC converter or a single-phase AC/DC converter.

As described above, in the control device 10, the model generator 12 generates various models from a piece of time-series data based on the detection signal, the model storage 13 stores the generated models, and the model switch 14 selects the optimal model in real time from the models stored in the model storage 13 based on the time-series data of the detection signal. The neural network 11 uses the model provided from the model switch 14 to generate a predicted value that predicts a future output voltage of the power supply block based on the time-series data of the detection signal, generates an appropriate control signal based on this predicted value so that the predicted value converges to the target value, and provides the generated control signal to the power supply block through the waveform generator 15.

Therefore, in the control device 10, an appropriate control signal can be generated at a timing when control is required, based on the time-series data of the detection signal. Accordingly, the output voltage of the power supply block 30 can be quickly converged to the target value even in the case of an unexpected fluctuation, and furthermore, overshoot, ringing, noise, loss, and the like that may occur due to the fluctuation can be reduced.

In addition, the control device 10 may be provided alone to control the power supply block, or may form a DC/DC converter or a single-phase AC/DC converter together with the power supply block. Further, the control device 10 may be configured as a single device by a semiconductor integrated circuit, or the neural network 11, the model generator 12, the model storage 13, the model switch 14, and the waveform generator 15 may be configured by individual devices. The neural network 11, the model generator 12, and the model switch 14 may be configured as logic blocks in a single device.

### (Second Embodiment)

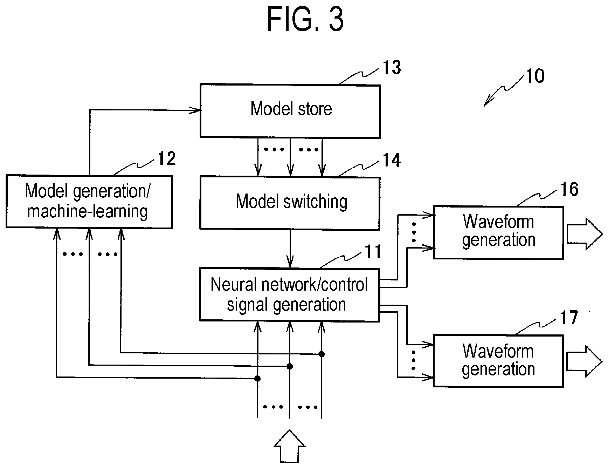

FIG. 3 is a diagram showing a schematic configuration of a control device according to a second embodiment. The control device according to the second embodiment and the control device 10 according to the first embodiment shown in FIG. 2 are common in that they both include: the neural network 11 that generates the control signal for controlling the power supply block in the converter; the model generator 12 that generates the model by machine-learning from the detection signal supplied from the power supply block; the model storage 13 that stores the model generated by the model generator 12; and the model switch 14 that switches the model stored in the model storage 13 and provides it to the neural network 11. For the sake of simplicity, elements common to the control device 10 according to the first embodiment are denoted by the same reference numerals as in the first embodiment.

The control device 10 according to the second embodiment is different from the control device 10 according to the first embodiment in that the latter has the single waveform generator 15 while the former has two waveform generators, i.e., first and second waveform generators 16 and 17. Control signals based on digital data are supplied from the neural network 11 to the first waveform generator 16 and the second waveform generator 17, respectively. The first waveform generator 16 and the second waveform generator 17 may be configured by D/A converters, respectively, like the waveform generator 15 of the control device 10 according to the first embodiment.

The first waveform generator 16 and the second waveform generator 17 respectively generate waveforms required for individually controlling on/off of two transistors serving as corresponding switching elements in the power supply block based on the control signals from the neural network 11. Here, the power supply block may include two transistors as switching elements even when the power supply block constitutes a DC/DC converter, a single-phase AC/DC converter, or a two-phase AC/DC converter.

As described above, in the control device 10 according to the second embodiment, as in the control device 10 according to the first embodiment, the neural network 11 can use an optimal model in real time to generate a predicted value that predicts a future output voltage of the power supply block from time-series data of the detection signal, can generate appropriate control signals based on this predicted value so that the predicted value converges to a target value, and can provide the control signals to the power supply block through the first waveform generator 16 and the second waveform generator 17.

Therefore, the control device 10 according to the second embodiment can generate the appropriate control signals at a timing when a control is required, based on the time-series data of the control signals, and can individually control the two transistors included in the power supply block through the first waveform generator 16 and the second waveform generator 17. For this reason, the output voltage of the power supply block can be quickly converged to the target value even in the case of an unexpected fluctuation, and furthermore, overshoot, ringing, noise, and loss that may occur due to the fluctuation can be reduced.

The control device 10 according to the second embodiment may be provided alone to control the power supply block, or may form a DC/DC converter, a single-phase AC/DC converter, or a two-phase AC/DC converter together with the power supply block. Further, like the control device 10 according to the first embodiment, the control device 10 according to the second embodiment may be configured as a single device by a semiconductor integrated circuit, or the neural network 11, the model generator 12, the model storage 13, the model switch 14, and the first and second waveform generators 16 and 17 may be configured by individual devices. The neural network 11, the model generator 12, and the model switch 14 may be configured as logic blocks in a single device.

The control device 10 according to the second embodiment includes the first waveform generator 16 and the second waveform generator 17 to generate waveforms of the control signals that individually control on/off of the two transistors serving as the corresponding switching elements in the power supply block, but may include three waveform generators when it is necessary to individually control on/off of three transistors serving as corresponding switching elements in the power supply block in a similar manner. Also in this case, the three waveform generators generate waveforms required to individually control on/off of the three transistors serving as the corresponding switching elements in the power supply block based on control signals from the neural network 11. Here, the power supply block may include the three transistors as the switching elements even when the power supply block constitutes a DC/DC converter, a single-phase AC/DC converter, a two-phase AC/DC converter, or a three-phase AC/DC converter. Similarly, the control device 10 according to the second embodiment may have four or more waveform generators.

### (Third Embodiment)

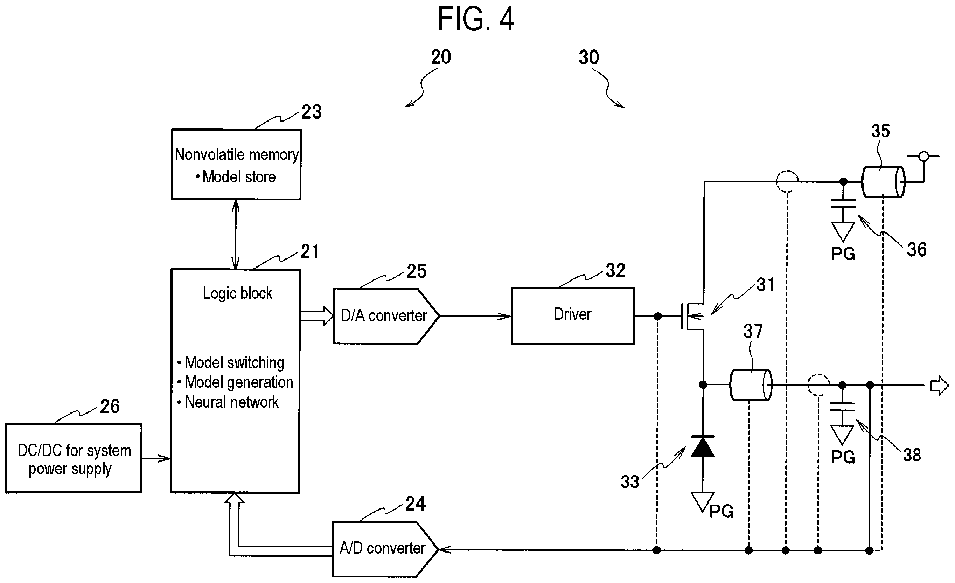

FIG. 4 is a diagram showing a schematic configuration of a DC/DC converter according to a third embodiment. The DC/DC converter constitutes an asynchronous rectification type step-down DC/DC converter.

The DC/DC converter includes a control block 20 and a power supply block 30, which is driven based on a control signal supplied from the control block 20. The control block 20 has a logic block 21 having functions of model generation, model switching, and a neural network, and a nonvolatile memory 23 that stores models.

In addition, the control block 20 has an A/D converter 24 configured to convert a detection signal as an analog signal provided from the power supply block 30 into digital data and provide it to the logic block 21, and a D/A converter 25 configured to convert a control signal as the digital data output from the logic block 21 into an analog signal and supply it to the power supply block 30. Further, the control block 20 has a DC/DC converter 26 for system power supply that supplies power to the control block 20.

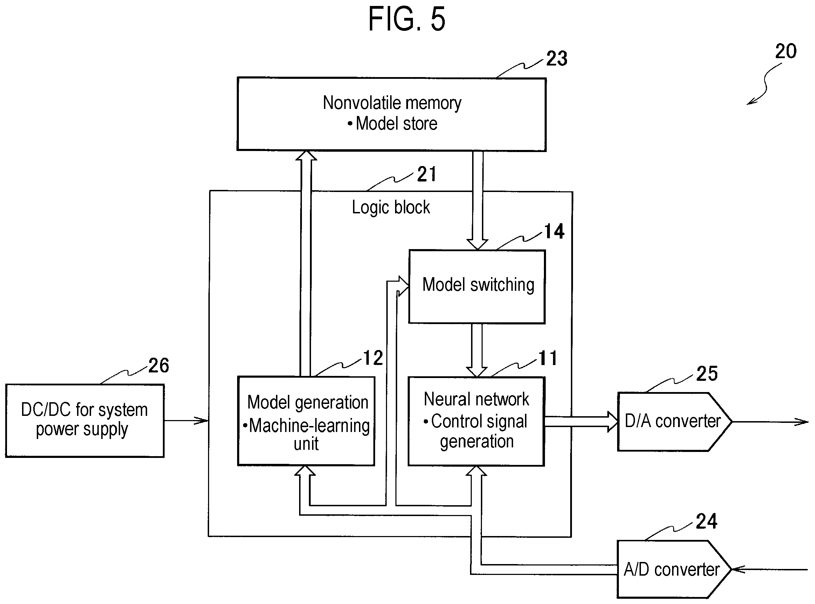

FIG. 5 is a diagram showing a schematic configuration of the control block 20 of the DC/DC converter according to the third embodiment. In the control block 20, the logic block 21 has a neural network 11 that generates a control signal for controlling the power supply block 30, a model generator 12 that generates a model by machine-learning from a detection signal supplied from the power supply block 30, and a model switch 14 that selects an optimal model based on the detection signal supplied from the power supply block 30.

Here, elements of the logic block 21, which is common with the control device 10 according to the first embodiment, are denoted by the corresponding reference numerals. In addition, the nonvolatile memory 23 and the D/A converter 25 correspond to the model storage 13 and the waveform generator 15, respectively, of the control device 10 according to the first embodiment.

The neural network 11 uses a model of a nonlinear dynamic system to generate the control signal for controlling the power supply block based on the detection signal provided from the power supply block 30. The detection signal is input as time-series data converted into a digital signal by the A/D converter 24.

The detection signal may be at least one or more of an output voltage value, an output current value, an input voltage value, an inductor current value, a capacitor current value, and the like of the power supply block 30. The control signal generated by using the model is output as digital data from the neural network 11. The neural network 11 may be an appropriate type of neural network such as a spiking neural network, a recurrent neural network, a convolutional neural network, or a fuzzy neural network.

The model generator 12 learns the detection signal as learning data and generates a model of a nonlinear dynamic system. For example, the model generator 12 may determine parameters of the model of the nonlinear dynamic system. The same detection signal input to the neural network 11 is input to the model generator 12. The detection signal is time-series data converted into a digital signal by the A/D converter 24. The model generator 12 supplies data of the generated model to the nonvolatile memory 23.

Based on the time-series data of the input detection signal, the model switch 14 adaptively switches to an optimal model for the time-series data in real time from among a plurality of models stored in the model storage 13, and provides the optimal model to the neural network 11. The model may be given by parameters of the model of the nonlinear dynamic system.

The neural network 11 uses the model provided from the model switch 14 to generate the control signal for controlling the power supply block based on the time-series data of the detection signal. The neural network 11 may predict future time-series data by expressing the time-series data as an adaptive nonlinear dynamic system based on the concept of regime shift, and may generate the control signal to control the power supply block 30 so as to perform quick convergence to a target value. As the model selected from the model switch 14, parameters of the nonlinear dynamic system of the model may be provided to the neural network 11. The neural network 11 outputs the control signal as digital data.

The nonvolatile memory 23 stores the data of the model supplied from the logic block 21 and provides the stored data of the model to the logic block 21. The nonvolatile memory 23 stores the data of the model supplied from the model generator 12 of the logic block 21 and provides the stored data of the model to the model switch 14 of the logic block 21. The data of the model may be, for example, parameters of the model of the nonlinear dynamic system.

The D/A converter 25 generates a waveform required for controlling on/off of a single transistor serving as a corresponding switching element in the power supply block 30. The A/D converter 24 converts the detection signal from the power supply block 30 from an analog signal to digital data. The DC/DC converter 26 for system power supply supplies power of a predetermined voltage required for driving the control block 20.

The control block 20 may be configured as a device by a semiconductor integrated circuit by adding the nonvolatile memory 23, the A/D converter 24, the D/A converter 25, and the like to the logic block 21, or the logic block 21, the nonvolatile memory 23, the A/D converter 24, the D/A converter 25, and the DC/DC converter 26 for system power supply may be configured by individual devices.

Referring to FIG. 4 again, in the power supply block 30, a first inductor 35, a transistor 31 serving as a switching element, and a diode 33 are provided in series between a power supply line and a ground line. The transistor 31 may be a P-channel MOSFET, and the diode 33 may be a Schottky diode. A first capacitor 36 is provided between a connection node between the first inductor 35 and a source of the transistor 31 and the ground line. A symbol PG attached to a line in the drawings denotes that the line is the ground line of the power supply block. A low-pass filter is constituted by the first inductor 35 and the first capacitor 36. This low-pass filter blocks noise and the like from the power supply line.

A connection node between a drain of the transistor 31 and a cathode of the diode 33 is connected to an output terminal (not shown) via a second inductor 37, and an output current is supplied from this node toward the output terminal. A second capacitor 38 is provided between a connection node between the second inductor 37 and the output terminal and the ground line. A low-pass filter is constituted by the second inductor 37 and the second capacitor 38.

In the power supply block 30, a control signal from the control block 20 is supplied to a gate of the transistor 31, which is the switching element, via a driver 32 to control a drain current. The drain current is supplied from the power supply line and flows toward the output terminal to form the output current. A current generated by a flyback voltage of the second inductor 37 flows back via the diode 33.

In the power supply block 30, since the transistor 31 is driven according to the control signal from the control block 20, the drain current generally becomes a pulsating current. However, the pulsating current is smoothed by the low-pass filter constituted by the second inductor 37 and the second capacitor 38, and then is sent to the output terminal. Thus, DC power dropped from a voltage of the power supply line is supplied from the output terminal.

In the power supply block 30, an output voltage obtained from an output line connected to the output terminal is provided as a detection signal to the control block 20. However, the detection signal is not limited to the output voltage, but may be of other types. As indicated by broken lines in FIG. 4, the detection signal may be a gate voltage of the transistor 31, a current of the first inductor 35, a source current of the transistor 31, a current of the second inductor 37, or an output current. Further, two or more of the output voltage, the gate voltage, and the like may be detected. Here, the source current and the output current may be detected by current sensors from a source line and the output line, respectively. Further, a current of the first capacitor 36 or a current of the second capacitor 38 may be detected. The same applies to the following embodiments.

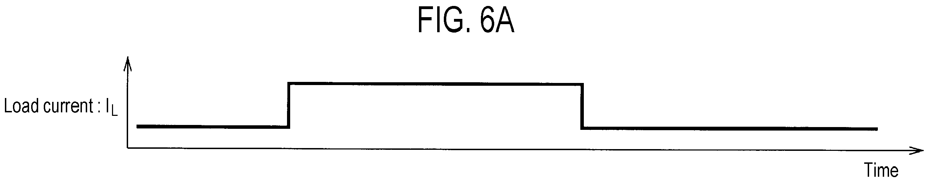

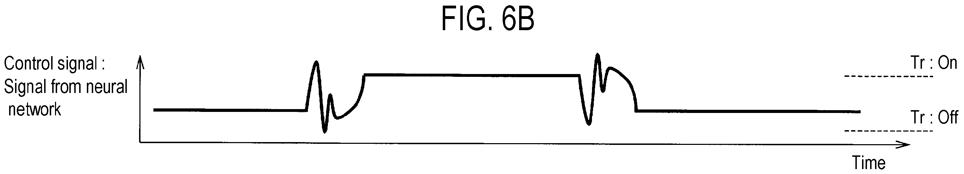

FIGS. 6A to 6C are time charts showing waveforms in the DC/DC converter according to the third embodiment. FIG. 6A shows a temporal change of a load current IL flowing via the output terminal of the power supply block 30. It can be seen that the load current IL increases in a pulse shape over a certain period of time. FIG. 6B shows a temporal change of a control signal generated by the control block 20. This control signal is generated by the neural network 11 of the control block 20 based on the detection signal from the power supply block 30. The control signal shifts from a lower first level to a higher second level at a rising timing of the load current IL through transient vibration over a predetermined period of time, and shifts from the higher second level to the lower first level at a falling timing of the load current IL through transient vibration over a predetermined period of time.

FIG. 6B shows a level at which the transistor 31 is turned on and a level at which the transistor 31 is turned off. Referring to these on/off levels, the lower first level and the higher second level are both located in the middle of the on/off levels. Therefore, it can be seen that the transistor 31 is controlled to operate not only in a saturation region and a cutoff region corresponding to on/off of the transistor 31, respectively, but also in an active region between the saturation region and the cutoff region.

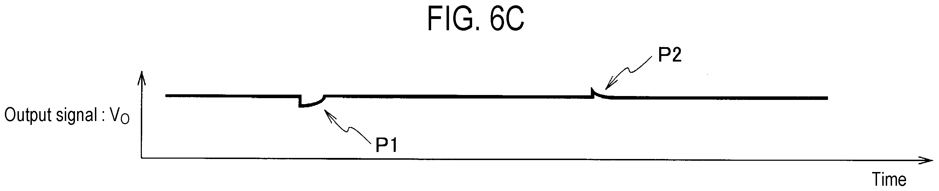

FIG. 6C shows a temporal change of an output voltage Vo of the power supply block 30. A first overshoot PI is seen at the rising timing of the load current IL, and a second overshoot P2 is seen at the falling timing of the load current IL. However, for both the first overshoot P1 and the second overshoot P2, it can be seen that fluctuation of the voltage is small and the time until convergence is short.

In the DC/DC converter according to the third embodiment, the control block 20 has the logic block 21, which includes the neural network 11, the model generator 12, and the model switch 14, and the nonvolatile memory 23. The model generator 12 generates various models from a single piece of time-series data based on the detection signal and stores the generated models in the nonvolatile memory 23. The model switch 14 selects an optimal model in real time from the models stored in the nonvolatile memory 23 based on the time-series data of the detection signal. The neural network 11 uses the model provided from the model switch 14 to generate a predicted value that predicts a future output voltage of the power supply block 30 based on the time-series data of the detection signal, generates an appropriate control signal based on the predicted value so that the predicted value converges to a target value, and provides the control signal to the power supply block 30 via the D/A converter 25.

Therefore, in the DC/DC converter according to the third embodiment, an appropriate control signal can be generated at a timing when control is required, based on the time-series data of the detection signal. For this reason, the output voltage of the power supply block 30 can be quickly converged to the target value even in the case of an unexpected fluctuation, and furthermore, overshoot, ringing, noise, and loss that may occur due to the fluctuation can be reduced.

Further, in the DC/DC converter according to the third embodiment, the transistor 31 serving as the switching element is controlled to operate not only in a saturation region and a cutoff region corresponding to on/off of the transistor 31, respectively, but also in an active region between the saturation region and the cutoff region. Therefore, the drain current of the transistor 31 is reduced, so that power consumption of the power supply block 30 can be reduced and further, power conversion efficiency of the DC/DC converter can be improved.

### (Fourth Embodiment)

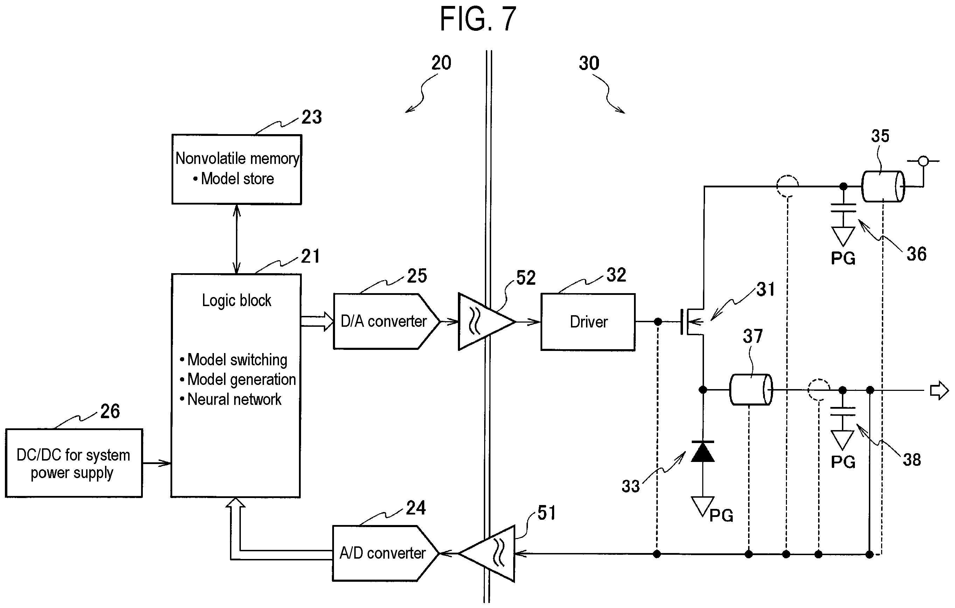

FIG. 7 is a diagram showing a schematic configuration of a DC/DC converter according to a fourth embodiment. This DC/DC converter constitutes an asynchronous rectification type insulated step-down DC/DC converter.

The DC/DC converter according to the fourth embodiment and the DC/DC converter according to the third embodiment are common in that the DC/DC converter according to the fourth embodiment has the control block 20 and the power supply block 30, which have the same configuration as those of the DC/DC converter according to the third embodiment, but is different from the DC/DC converter according to the third embodiment in that galvanic insulation is provided between the control block 20 and the power supply block 30.

In a line of a detection signal provided from the power supply block 30 to the control block 20, a first galvanic insulation device 51 is provided between the output line of the power supply block 30 and the A/D converter 24 of the control block 20. Further, in a line of a control signal supplied from the control block 20 to the power supply block 30, a second galvanic insulation device 52 is provided between the D/A converter 25 of the control block 20 and the driver 32 of the power supply block 30. The first galvanic insulation device 51 and the second galvanic insulation device 52 may be configured by galvanic insulating logic ICs.

The control block 20 has the logic block 21 having functions of model generation, model switching, and a neural network, and the nonvolatile memory 23 that stores a model. The logic block 21 and the nonvolatile memory 23 have a configuration as shown in FIG. 5, as in the third embodiment, and operate in the same manner as in the third embodiment. Further, the control block 20 has the A/D converter 24 that converts a detection signal, which is an analog signal provided from the power supply block 30 via the first galvanic insulation device 51, into digital data and provides it to the logic block 21, and the D/A converter 25 that converts a control signal, which is the digital data output from the logic block 21, into an analog signal and supplies it to the power supply block 30 via the second galvanic insulation device 52. Further, the control block 20 has the DC/DC converter 26 for system power supply that supplies power to the control block 20.

The control block 20 may be configured as a device by a semiconductor integrated circuit by adding the nonvolatile memory 23, the A/D converter 24, the D/A converter 25, and the like to the logic block 21, or the logic block 21, the nonvolatile memory 23, the A/D converter 24, the D/A converter 25, and the DC/DC converter 26 for system power supply may be configured by individual devices.

In the power supply block 30, the first inductor 35, the transistor 31 serving as the switching element, and the diode 33 are provided in series between the power supply line and the ground line. The first capacitor 36 is provided between the connection node between the first inductor 35 and the source of the transistor 31 and the ground line. A low-pass filter is constituted by the first inductor 35 and the first capacitor 36.

The connection node between the drain of the transistor 31 and the cathode of the diode 33 is connected to the output terminal (not shown) via the second inductor 37, and the output current is supplied from this node toward the output terminal. The second capacitor 38 is provided between the connection node between the second inductor 37 and the output terminal and the ground line. A low-pass filter is constituted by the second inductor 37 and the second capacitor 38.

In the power supply block 30, a control signal from the control block 20 is supplied to the gate of the transistor 31, which is the switching element, via the D/A converter 25, the second galvanic insulation device 52, and the driver 32 to control the drain current. The drain current is supplied from the power supply line and flows toward the output terminal to form the output current. A current generated by a flyback voltage of the second inductor 37 flows back via the diode 33.

In the power supply block 30, since the transistor 31 is driven according to the control signal from the control block 20, the drain current generally becomes a pulsating current. However, the pulsating current is smoothed by the low-pass filter constituted by the second inductor 37 and the second capacitor 38, and then is sent to the output terminal. Thus, DC power dropped from a voltage of the power supply line is supplied from the output terminal. The output voltage is acquired from the output line connected to the output terminal and is provided as the detection signal to the A/D converter 24 of the control block 20 via the first galvanic insulation device 51.

In the DC/DC converter according to the fourth embodiment, the control block 20 and the power supply block 30 are connected via the first galvanic insulation device 51 and the second galvanic insulation device 52, so that the control block 20 and the power supply block 30 are galvanically insulated from each other. Due to the galvanic insulation, noise generated in the power supply block 30 is blocked by the galvanic insulation, which improves noise resistance of the control block 20. Further, even when a failure occurs in the power supply block 30, the control block 20 can be protected because the failure is blocked by the galvanic insulation.

In the DC/DC converter according to the fourth embodiment, the control block 20 has the same configuration as shown in FIG. 5 and operates in the same manner as in the third embodiment. That is, the control block 20 has the logic block 21 including the neural network 11, the model generator 12, and the model switch 14, and the nonvolatile memory 23. The model generator 12 generates various models from a piece of time-series data based on the detection signal obtained via the first galvanic insulation device 51, and stores the generated models in the nonvolatile memory 23. The model switch 14 selects an optimal model in real time from the models stored in the nonvolatile memory 23 based on the time-series data. The neural network 11 uses the model provided from the model switch 14 to generate a predicted value that predicts a future output voltage of the power supply block 30 based on the time-series data, generates an appropriate control signal based on this prediction so that the predicted value converges to a target value, and provides the control signal to the power supply block 30 through the D/A converter 25.

Therefore, in the DC/DC converter according to the fourth embodiment, an appropriate control signal can be generated at a timing when a control is required, based on the time-series data of the detection signal. For this reason, the output voltage of the power supply block 30 can be quickly converged to the target value even in the case of an unexpected fluctuation, and furthermore, overshoot, ringing, noise, and loss that may occur due to the fluctuation can be reduced.

Further, in the DC/DC converter according to the fourth embodiment, the transistor 31 serving as the switching element is controlled to operate not only in a saturation region and a cutoff region corresponding to the on/off of the transistor 31, respectively, but also in an active region between the saturation region and the cutoff region. Therefore, the drain current of the transistor 31 is reduced, so that power consumption of the power supply block 30 can be reduced and further, power conversion efficiency of the DC/DC converter can be improved.

### (Fifth Embodiment)

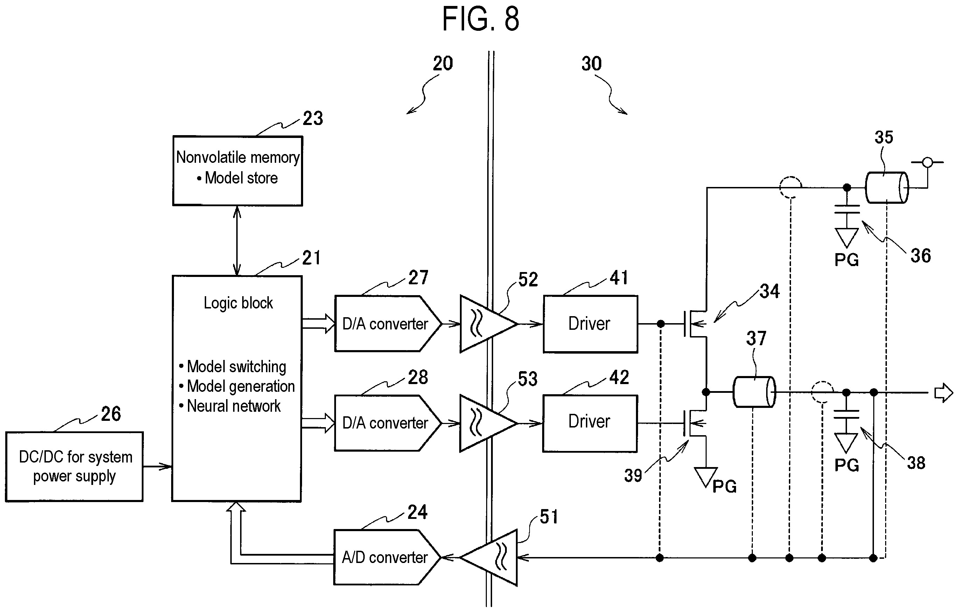

FIG. 8 is a diagram showing a schematic configuration of a DC/DC converter according to a fifth embodiment. This DC/DC converter constitutes a synchronous rectification type insulated step-down DC/DC converter.

The DC/DC converter according to the fifth embodiment has substantially the same configuration as the DC/DC converter according to the third embodiment except that the control block 20 and the power supply block 30 are galvanically insulated from each other, a second transistor 39 is provided instead of the diode in the power supply block 30, and the first transistor 34 and the second transistor 39 form a high-side switching element and a low-side switching element, respectively. For the sake of simplicity, elements common to the DC/DC converter according to the third embodiment are denoted by the same reference numerals as in the third embodiment.

Two control signals, which are two sets of digital data, for controlling the first transistor 34 as a first switching element and the second transistor 39 as a second switching element in the power supply block 30, respectively, are generated from the logic block 21 of the control block 20, and are supplied to gates of the first transistor 34 and the second transistor 39, respectively, via a first D/A converter 27 and a second D/A converter 28, a second galvanic insulation device 52 and a third galvanic insulation device 53, and a first driver 41 and a second driver 42.

In a line of a detection signal provided from the power supply block 30 to the control block 20, a first galvanic insulation device 51 is provided between the output line of the power supply block 30 and the A/D converter 24 of the control block 20. Further, as described above, in lines of the two control signals supplied from the control block 20 to the power supply block 30, the second galvanic insulation device 52 and the third galvanic insulation device 53 are provided between the first D/A converter 27 of the control block 20 and the first driver 41 of the power supply block 30 and between the second D/A converter 28 of the control block 20 and the second driver 42 of the power supply block 30, respectively. The first galvanic insulation device 51, the second galvanic insulation device 52, and the third galvanic insulation device 53 may be configured by a galvanic insulation logic IC.

The control block 20 has the logic block 21 having functions of model generation, model switching, and a neural network, and the nonvolatile memory 23 provided to the logic block 21 for storing a model. The logic block 21 and the nonvolatile memory 23 have the same configuration as that shown in FIG. 5, except that the neural network 11 generates the two control signals, which are the two sets of digital data, for controlling the first transistor 34 as the first switching element and the second transistor 39 as the second switching element in the power supply block 30, respectively, and in order to convert these two sets of digital data into analog signals, the D/A converter 25 is replaced with the first D/A converter 27 and the second D/A converter 28. Other configurations are the same as in the third embodiment and operate in the same manner as in the third embodiment.

The control block 20 further has the A/D converter 24 that converts a detection signal, which is an analog signal provided from the power supply block 30 via the first galvanic insulation device 51, into digital data and provides it to the logic block 21, and the DC/DC converter 26 for system power supply that supplies power to the control block 20.

The control block 20 may be configured as a device by a semiconductor integrated circuit by adding the nonvolatile memory 23, the A/D converter 24, the first D/A converter 27, the second D/A converter 28, and the like to the logic block 21, or the logic block 21, the nonvolatile memory 23, the A/D converter 24, the first D/A converter 27, the second D/A converter 28, and the DC/DC converter 26 for system power supply may be configured by individual devices.

In the power supply block 30, the first inductor 35, the first transistor 34 as the high-side switching element, and a second transistor 39 as the low-side switching element are provided in series between the power supply line and the ground line. The first transistor 34 and the second transistor 39 may be P-channel MOSFETs. The first capacitor 36 is provided between a connection node between the first inductor 35 and a source of the first transistor 34 and the ground line. A low-pass filter is constituted by the first inductor 35 and the first capacitor 36.

A connection node between a drain of the first transistor 34 and a drain of the second transistor 39 is connected to an output terminal (not shown) via the second inductor 37, and an output current is supplied from this node toward the output terminal. The second capacitor 38 is provided between a connection node between the second inductor 37 and the output terminal and the ground line. A low-pass filter is constituted by the second inductor 37 and the second capacitor 38.

In the power supply block 30, control signals from the control block 20 are supplied to the gates of the first transistor 34 as the first switching element and the second transistor 39 as the second switching element, respectively, via the first D/A converter 27, the second galvanic insulation device 52 and the first driver 41, the second D/A converter 28, and the third galvanic insulation device 53 and the second driver 42 to control drain currents. The drain current of the first transistor 34 is supplied from the power supply line and flows toward the output terminal. The second transistor 39 flows back a current, which is generated by a flyback voltage of the second inductor 37, as the drain current thereof.

In the power supply block 30, since the first transistor 34 and the second transistor 39 are driven according to the control signals from the control block 20, the sum of the drain currents of the first transistor 34 and the second transistor 39 generally becomes a pulsating current. However, the pulsating current is smoothed by the low-pass filter constituted by the second inductor 37 and the second capacitor 38, and then is sent to the output terminal. Thus, DC power dropped from a voltage of the power supply line is supplied from the output terminal. The output voltage is acquired from the output line connected to the output terminal and is provided as the detection signal to the A/D converter 24 of the control block 20 via the first galvanic insulation device 51.

In the DC/DC converter according to the fifth embodiment, the control block 20 and the power supply block 30 are connected via the first galvanic insulation device 51, the second galvanic insulation device 52, and the third galvanic insulation device 53, so that they are galvanically insulated from each other. Due to the galvanic insulation, noise generated in the power supply block 30 is blocked by the galvanic insulation, so that noise resistance of the control block 20 is improved. Further, even when a failure occurs in the power supply block 30, the failure is blocked by the galvanic insulation, so that the control block 20 can be protected.

The DC/DC converter according to the fifth embodiment adopts a structure of a synchronous rectification type in which the second transistor 39 is adopted instead of the diode 33 in the DC/DC converter according to the third embodiment and the DC/DC converter according to the fourth embodiment, and in which the first transistor 34 of a high-side and the second transistor 39 of a low-side are provided in series between the power supply line and the ground line. The second transistor 39 can suppress a voltage drop in an on state to be smaller than that in the case of using the diode 33. Thus, power consumption of the power supply block 30 can be reduced, and furthermore, power conversion efficiency of the DC/DC converter can be improved.

In the DC/DC converter according to the fifth embodiment, the control block 20 has the same configuration as shown in FIG. 5 and operates in the same manner as in the third embodiment. That is, the control block 20 has the logic block 21 including the neural network 11, the model generator 12, and the model switch 14, and the nonvolatile memory 23. The model generator 12 generates various models from a piece of time-series data, which is the detection signal obtained via the first galvanic insulation device 51, and stores the generated models in the nonvolatile memory 23. The model switch 14 selects an optimal model in real time from the models stored in the nonvolatile memory 23 based on the time-series data. The neural network 11 uses the model provided from the model switch 14 to generate a predicted value that predicts a future output voltage of the power supply block 30 based on the time-series data, generates appropriate control signals based on this prediction so that the predicted value converges to a target value, and provides the control signals to the power supply block 30 via the first D/A converter 27 and the second D/A converter 28.

Therefore, in the DC/DC converter according to the fifth embodiment, the appropriate control signals can be generated at a timing when control is required, based on the time-series data of the detection signal. Therefore, the output voltage of the power supply block 30 can be quickly converged to the target value even in the case of an unexpected fluctuation, and furthermore, overshoot, ringing, noise, and loss that may occur due to the fluctuation can be reduced.

Further, in the DC/DC converter according to the fifth embodiment, the first transistor 34 and the second transistor 39 serving as the first switching element and the second switching element, respectively, are controlled to operate not only in saturation regions and cutoff regions corresponding to on/off of the first and second transistors 34 and 39, respectively, but also in active regions between the saturation regions and the cutoff regions. Therefore, the drain currents of the first transistor 34 and the second transistor 39 are reduced, so that power consumption of the power supply block 30 can be reduced and further, power conversion efficiency of the DC/DC converter can be improved.

### (Comparative Example)

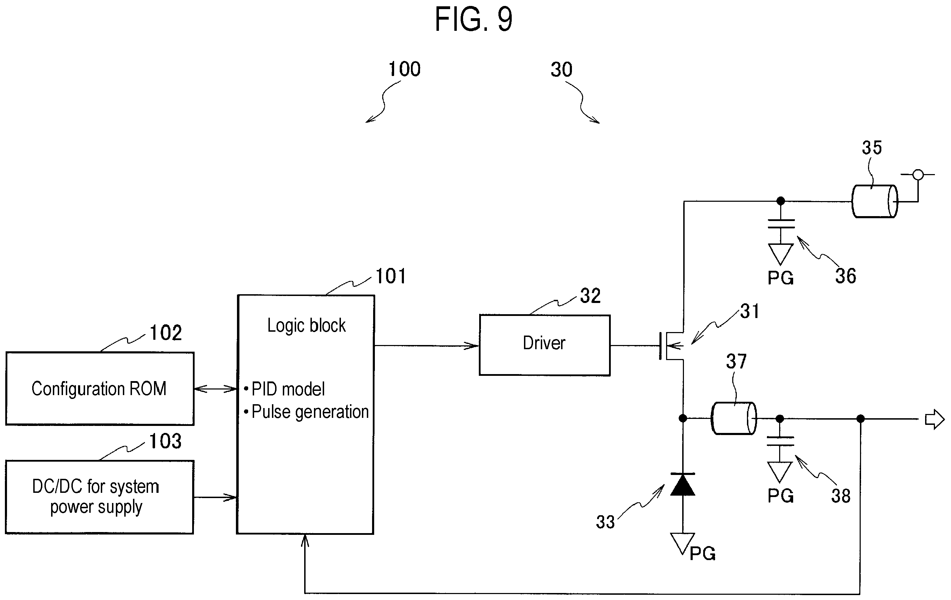

FIG. 9 is a diagram showing a schematic configuration of a DC/DC converter of a comparative example. This DC/DC converter constitutes an asynchronous rectification type step-down DC/DC converter using a PID control.

The DC/DC converter has a control block 100 and a power supply block 30 driven based on a control signal supplied from the control block 100. Since the power supply block 30 has the same configuration as the power supply block 30 of the DC/DC converter according to the third embodiment, common elements are denoted by the same reference numerals for the sake of simplicity.

The control block 100 has a logic block 101. The logic block 101 has a PID model part that generates a control signal for controlling the power supply block 30 according to a PID model, and a pulse generator that generates a driving pulse by pulse width modulation (PWM) for driving the power supply block 30 based on the control signal generated by the PID model part. The PID model part performs a feedback control by using coefficients of a deviation from a target value and integration and differentiation of the deviation as parameters. The PID model part uses a PID model of an output voltage of the power supply block 30 to generate the control signal so that the output voltage of the power supply block 30 follows the target value. The pulse generator PWM-modulates the control signal generated by the PID model part to generate a driving pulse for driving the power supply block 30.

The control block 100 has a configuration ROM 102 that stores parameters and the like to be used in the PID model part, and a DC/DC converter 103 for system power supply for supplying power to the control block 100. The configuration ROM 102 can provide the stored parameters of the PID model to the PID model part of the logic block 101. The parameters of the PID model stored in the configuration ROM 102 may be updated as needed.

In the power supply block 30, a first inductor 35, a transistor 31 as a switching element, and a diode 33 are provided in series between a power supply line and a ground line. The transistor 31 may be a P-channel MOSFET and the diode 33 may be a Schottky diode. A first capacitor 36 is provided between a connection node between the first inductor 35 and a source of the transistor 31 and the ground line. A low-pass filter is constituted by the first inductor 35 and the first capacitor 36. This low-pass filter blocks noise and the like from the power supply line.

A connection node between a drain of the transistor 31 and a cathode of the diode 33 is connected to an output terminal (not shown) via a second inductor 37, and an output current is supplied from this node toward the output terminal. A second capacitor 38 is provided between a connection node between the second inductor 37 and the output terminal and the ground line. A low-pass filter is constituted by the second inductor 37 and the second capacitor 38.

In the power supply block 30, the driving pulse from the control block 100 is supplied to a gate of the transistor 31, which is the switching element, via the driver 32 to control a drain current. The drain current is supplied from the power supply line and flows toward the output terminal to form an output current. A current generated by a flyback voltage of the second inductor 37 flows back through the diode 33.

In the power supply block 30, since the transistor 31 is driven according to the driving pulse from the control block 100, the drain current generally becomes a pulsating current. However, the pulsating current is smoothed by the low-pass filter constituted by the second inductor 37 and the second capacitor 38 and then is sent to the output terminal. Thus, DC power dropped from a voltage of the power supply line is supplied from the output terminal. The output voltage is acquired from an output line connected to the output terminal and is provided as a detection signal to the control block 100.

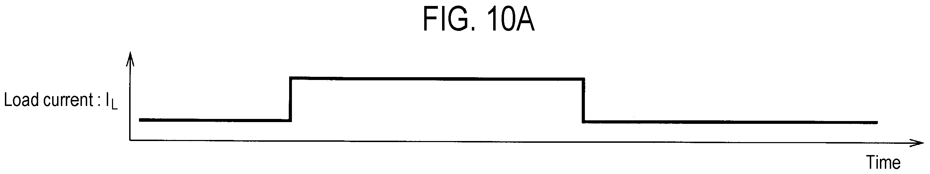

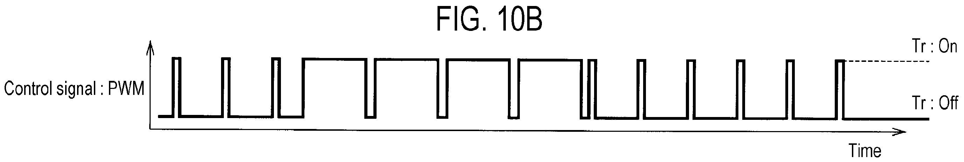

FIGS. 10A to 10D are time charts showing waveforms in the DC/DC converter of the comparative example. FIG. 10A shows a temporal change of a load current IL flowing through the output terminal of the power supply block 30. It can be seen that the load current IL increases in a pulse shape over a certain period of time. FIG. 10B shows a temporal change of a driving pulse of the control signal generated by the control block 100. The control signal is configured as a driving pulse modulated by PWM and controls on/off of the transistor 31 as the switching element.

FIG. 10B shows a level at which the transistor 31 is turned on and a level at which the transistor 31 is turned off. Referring to these on/off levels, it can be seen that the transistor 31 is turned on/off at two levels of a saturation region and a cutoff region according to the driving pulse.

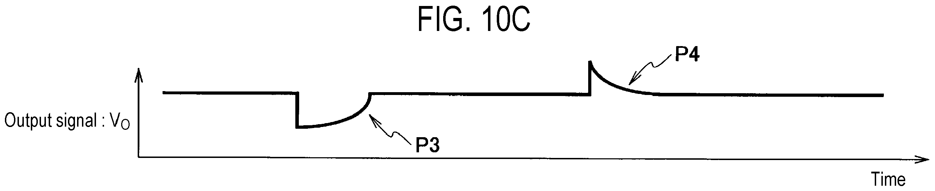

FIG. 10C shows an example of a temporal change of an output voltage Vo of the power supply block 30. This example is a case where in the PID model, parameters corresponding to displacement are small and parameters corresponding to integration and differentiation are large. A first overshoot P3 is seen at a rising edge of the load current IL, and a second overshoot P4 is seen at a falling edge of the load current IL. However, for both the first overshoot P3 and the second overshoot P4, it can be seen that fluctuation of the voltage is relatively small and the time until the voltage converges to a target value is long.

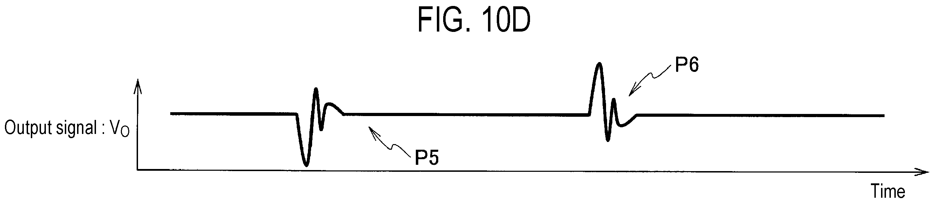

FIG. 10D shows another example of the temporal change of the output voltage Vo of the power supply block 30. This example is a case where in the PID model, parameters corresponding to displacement are large and parameters corresponding to integration and differentiation are small. A first overshoot P5 is seen at a rising edge of the load current IL, and a second overshoot P6 is seen at a falling edge of the load current IL. However, for both the first overshoot P5 and the second overshoot P6, it can be seen that the time until the voltage converges to a target value is relatively short, but fluctuation of the voltage is large.

### [Industrial Applicability]

The present disclosure can be used for a DC/DC converter or an AC/DC converter.

According to the present disclosure in some embodiments, it is possible to provide a converter capable of quickly converging an output voltage to a target value even in a case of an unexpected fluctuation, and furthermore, capable of reducing overshoot, ringing, noise, and loss that may occur due to the fluctuation.

While certain embodiments have been described, these embodiments have been presented by way of example only, and are not intended to limit the scope of the disclosures. Indeed, the embodiments described herein may be embodied in a variety of other forms. Furthermore, various omissions, substitutions and changes in the form of the embodiments described herein may be made. The accompanying claims and their equivalents are intended to cover such forms or modifications as would fall within the scope of the disclosures.

## Claims

1. A control device (10) that controls an output voltage of a converter, comprising:
a neural network (11) configured to generate a control signal for controlling a power supply block (30) based on a detection signal from an output stage of the power supply block (30) that supplies power to a load of the converter;
a model generator (12) configured to generate a model of a nonlinear dynamic system by machine-learning from the detection signal;
a model storage (13) configured to store the model generated by the model generator (12); and
a model switch (14) configured to switch to a model, which is selected from models stored in the model storage (13) and is optimal for a latest detection signal, and provide the switched model to the neural network (11),
wherein the neural network (11) generates the control signal based on a future output voltage predicted by using the model provided by the model switch (14).

2. The control device (10) of Claim 1, further comprising a waveform generator (15, 16, 17) configured to generate a waveform for driving the power supply block (30) based on the control signal supplied from the neural network (11).

3. The control device (10) of Claim 1 or 2, wherein the converter is a DC/DC converter or an AC/DC converter.

4. A converter comprising:
a power supply block (30) configured to supply power to a load; and
a control block (20) configured to control the power supply block (30),
wherein the control block (20) includes:
a neural network (11) that generates a control signal for controlling the power supply block (30) based on a detection signal from an output stage of the power supply block (30);
a model generator (12) that generates a model of a nonlinear dynamic system by machine-learning from the detection signal;
a model storage (13) that stores the model generated by the model generator (12); and
a model switch (14) that switches to a model which is selected from models stored in the model storage (13) and is optimal for a latest detection signal, and provides the switched model to the neural network (11), and
wherein the neural network (11) generates the control signal based on a future output voltage predicted by using the model provided by the model switch (14).

5. The converter of Claim 4, wherein the control block (20) further includes a D/A converter (25, 27, 28) that converts the control signal, which is digital data, supplied from the neural network (11) into an analog signal, and supplies the analog signal to the power supply block (30).

6. The converter of Claim 4 or 5, wherein the power supply block (30) includes a transistor (31) and a diode (33), which are connected in series between a power supply line and a ground line, and the transistor (31) is driven based on the control signal from the control block (20) to output a current from a connection node between the transistor (31) and the diode (33).

7. The converter of Claim 6, wherein the neural network (11) controls the transistor (31) to operate in an active region.

8. The converter of Claim 4 or 5, wherein the power supply block (30) includes a first transistor (34) and a second transistor (39), which are connected in series between a power supply line and a ground line, and the first transistor (34) and the second transistor (39) are driven based on the control signal from the control block (20) to output a current from a connection node between the first transistor (34) and the second transistor (39).

9. The converter of Claim 8, wherein the neural network (11) controls at least one of the first transistor (34) and the second transistor (39) to operate in an active region.

10. The converter of any one of Claims 4 to 9, wherein the control block (20) and the power supply block (30) are galvanically insulated from each other.

11. The converter of any one of Claims 4 to 10, wherein the converter constitutes a DC/DC converter or an AC/DC converter.
